# EUROPÄISCHE PATENTSCHRIFT

(11) **EP 0 953 217 B1**
(45) Veröffentlichungstag und Bekanntmachung des Hinweises auf die Patenterteilung: **29.08.2001**
(21) Anmeldenummer: 97951119.3
(22) Anmeldetag: 11.12.1997
(51) Int. Cl.: H01M 8/00

(54) **KÜHLSYSTEM FÜR EINE BRENNSTOFFZELLENBATTERIE**
COOLING SYSTEM FOR A FUEL CELL BATTERY
SYSTEME DE REFRIGERATION POUR BATTERIE DE PILES A COMBUSTIBLE

(30) Priorität: 13.12.1996 DE 19652005
(43) Veröffentlichungstag der Anmeldung: 03.11.1999
(73) Patentinhaber: SIEMENS AKTIENGESELLSCHAFT, 80333 München (DE)
(72) Erfinder: MUND, Konrad, D-91080 Uttenreuth (DE); VON HELMOLT, Rittmar, D-91052 Erlangen (DE)
(86) Internationale Anmeldenummer: DE9702891
(87) Internationale Veröffentlichungsnummer: WO9826464

(56) Entgegenhaltungen:
- DE-A- 19 523 317
- DE-C- 4 442 285
- US-A- 4 826 741
- US-A- 4 839 247
- US-A- 5 230 966
- PATENT ABSTRACTS OF JAPAN vol. 010, no. 302 (E-445), 15.Oktober 1986 & JP 61 116762 A (SANYO ELECTRIC CO LTD), 4.Juni 1986,
- PATENT ABSTRACTS OF JAPAN vol. 012, no. 385 (E-668), 14.Oktober 1988 & JP 63 128562 A (TOSHIBA CORP), 1.Juni 1988,

## Beschreibung

Die Erfindung betrifft eine Batterie aus Brennstoffzelleneinheiten, von denen jede eine Membran-Elektroden-Einheit und zwei Kollektorplatten umfaßt. Daneben bezieht sich die Erfindung auf ein Verfahren zur Herstellung einer solchen Brennstoffzellenbatterie.

Bislang sind Brennstoffzellen-Batterien mit Kühisystemen bekannt, bei denen in Bipolarplatten, die sich zwischen den einzelnen Brennstoffzellen-Einheiten einer Batterie befinden, Kühlmedien strömen. Daneben sind neuere Kühlsysteme für diese Batterien offenbart, die ohne Bipolarplatten oder Filter-pressentechnik im Gas- oder im Flüssigkeitsbad (DE-PS 44 42 285) gekühlt sind und einzeln handhabbare Brennstoffzelleneinheiten innerhalb der Batterie aufweisen.

Bei der Batteriekühlung mit Bipolarplatten treten insbesondere Dichtungsprobleme auf, weil Bereiche nebeneinander liegen, in denen Oxidans und Brennstoff geführt werden, die zuvelrässig gegeneinander abgedichtet werden müssen. Beid en erst seit kurzem bekannten Brennstoffzellenbatterien ohne Bipolarplatten (DE-PS 44 42 285) sind bislang grundsätzlich nur zwei Kühlsysteme bekannt, die beide das Kuhlmedium in freiem Strom durch die Batterie fließen lassen.

Beim Konzept der Flüssigkeitskühlung tritt jedoch u.U. das Problem der gleichmäßigen Verteilung und Durchströmung des Kühlmediums innerhalb der Brennstoffzellenbatterie auf, weil die Bereiche nahe von Ein- und Auslaßöffnungen der Batterie intensiver durchströmt und damit gekühlt werden als die anderen Bereiche der Batterie. Außerdem kann es - besonders, wenn mit den Werkstoffen der Brennstoffzellen nicht verträgliche Kühlmittel verwendet wrden - von Nachteil sein, daß viele Bauteile der Batterie mit dem Kühlmittel in Verbindung kommen.

Auf die Patentschrift DE-44 42 285 C1 wird hiermit vollinhaltlich bezug genommen.

Es besteht der Bedarf an kostengünstigen, d.h. ohne Bipolarplatten konstruierten Batterien aus Brennstoffzellen, bei denen das Kühlsystem eine möglichst gleichmäßige Verteilung des Kühlmittels innerhalb der Batterie gewährleistet. Bei Brennstoffzellenbatterien mit Bipolarpltten bestgeht außerdem der Bedarf an einer Kühlkapazität, die, wenn die Batterie temporärhöhere Leistungen bringen muß, zuschaltbar ist.

Die Konstruktion von Brennstoffzellenbatterien ist beispielhaft aus der DE 195 23 317 A und der US 5 230 966 A beschrieben. Dort sind Kühlkreiskanäle durch externe Leitungen gebildet bzw. werden einzelne Kühlplatten durch solche Leitungen verbunden. Dadurch ist diese Konstruktion vergleichsweise aufwendig. Speziell in der US 4 839 247 A wird ein passives ohne Fluid arbeitendes Kühlsystem für Brennstoffzellenbatterien durch Kohlenstoffplatten gebildet, wobei keine Verbindungsleitungen notwendig sind.

Aufgabe der vorliegenden Erfindung ist es daher, ein Kühlsystem für eine Brennstoffzellenbatterie, insbesondere eine PEM-Brennstoffzellenbatterie zu schaffen, das eine möglichst gleichmäßige Durchströmung einer Brennstoffzellenbatterie mit Kühlmittel gewährleistet und/oder das bei Bedarf einer vorhandenen Kühlung zugeschaltet werden kann. Daneben soll ein Verfahren zur Herstellung einer solchen Brennstoffzellenbatterie angegeben werden.

Die Aufgabe ist bei einer Brennstoffzellenbatterie erfindungsgemaß durch die Gesamtheit der Merkmale des Patentanspruches 1 gelöst. Vorteilhafte Weiterbildungen sind in den abhängigen Ansprüchen angegeben. Die Maßnahmen zur Herstellung einer solchen Brennstoffzellenbatterie sind Gegenstand des Patents.

Bei der Erfindung ist eine Batterie aus zumindest zwei Brennstoffzelleneinheiten, von denen jede eine Membran-Elektroden-Einheit und zwei Kollektorplatten umfaßt, wobei sich zwischen den Brennstoffzellen zumindest eine Kühlkarte befindet, die thermischen Kontakt zu zumindest einer der benachbarten Brennstoffzellen hat. Dabei sind die Leitungen des Kühlkreislaufes allein durch die Stapelung der Kühlkarten mit den Einzelelementen der Brennstoffzellenbatterie bei der Herstellung des Brennstoffzellenstapels gebildet.

Bei einer Ausführungsform der Erfindung sind die einzelnen Kühlkarten einer Batterie durch Leitungen, in denen Kühlmedium transportiert wird, verbunden. Elektrisch sind die Kühlkarten jedoch gegeneinander isoliert. Es ist kostengünstig, wenn durch die Leitungen nicht nur die Kühlkarten einer (oder mehrerer) Batterie(n) untereinander verbunden sind, sondern wenn sie auch mit einem externen Wärmetauscher, der zur Regeneration des Kühlmediums dient, und der z.B. auch in Form einer Wärmekraftmaschine ausgestaltet sein kann, verbunden sind.

Bei einer Ausführungsform ist die Kühlkarte mit endotherm reagierendem Medium derart gefüllt, daß über das abdichtende Rahmenelement freiwerdende Abgase der endothermen Reaktion entweichen können (z.B. Alkohol) und für die Betriebsdauer der Batterie genügend Kühlkapazität in einer Kühlkarte enthalten ist, so daß es keiner Versorgungs- oder Entsorgungsleitungen der Kühlkarte bedarf.

Bei einer praktischen Ausgestaltung der Erfindung sind die Kühlkarten selbst einfach und kostengünstig herstellbar, weil sie durch einfaches Abdichten und/oder Klammern und/oder. Zusammenstecken zweier geprägter Platten zusammengebaut werden.

Bei einer anderen vorteilhaften Ausgestaltung sind die Kühlkarten mit den jeweils angrenzenden Kollektorplatten der anschließenden Brennstoffzellen durch einen Klebstoff der thermisch und/oder elektrisch leitend ist, verbunden. Bei wieder einer anderen Ausführungsform können die Kühlkarten bei Bedarf in die Bipolarplatten eingeschoben werden. Schließlich können die Kühlkarten bei einer weiteren Ausgestaltung der Erfindung jeweils in einem Zwischenelement, das sich zwischen den Kollektorplatten der einzelnen Brennstoffzellen befindet, integriert sein. Als Zwischenelement eignet sich jedes Element, das innerhalb einer Brennstoffzellenbatterie zur
- Übertragung des mechanischen Drucks zwischen den einzelnen Brennstoffzellen,
- Übertragung des elektrischen Stromes zwischen den einzelnen Brennstoffzellen und
- zur Abfuhr der Verlustwärme von der Kollektorplatte dient. Beispielsweise eignet sich besonders gut das in der Patentanmeldung mit dem amtl. Aktz. 196 359 01.5 (derselben Anmelderin) offenbarte Zwischenelement.

Unter "Batterien" wird hier ein Aggregat oder Stack aus zumindest zwei, in Serie geschalteten Brennstoffzellen verstanden. Je nach Anwendung der Brennstoffzellenbatterie (stationäre Anwendungsgebiete der PEM-Batterien sind beispielsweise die Anwendungen bei der Hausenergieversorgung und bei der dezentralen Stromerzeugung, eine mobile Anwendung ist die Elektrotraktion) wird es sich in der Praxis um Aggregate mit einer weitaus höheren Anzahl an einzelnen, in Serie geschalteten Brennstoffzellen handeln.

Als "einzelne Brennstoffzelle" oder "Brennstoffzelleneinheit" der Batterie werden hier bevorzugt Brennstoffzellen, die in der bereits oben zitierten DE-PS 44 42 285 offenbart wurden, bezeichnet. Die genannten Brennstoffzellen sind nicht auf die PEM-Brennstoffzellen beschränkt (vgl. Sp.3 Zeilen 18 bis 27 der DE-PS) und sind einzel handhabbare Einheiten, die jeweils eine negative Polplatte, eine Membran-Elektroden-Einheit und eine positive Polplatte umfassen, wobei die obengenannten Bestandteile jeweils durch ein Rahmenelement mechanisch fest, gasdicht und elektronisch isolierend miteinander verbunden sind. Die Erfindung ist jedoch nicht auf Batterien aus diesen Brennstoffzellen beschränkt, sondern umfaßt, wie bereits erwähnt, auch Batterien, die mit der Filterpressentechnik unter Verwendung von Bipolarplatten hergestellt sind.

Der Begriff "Membran-Elektroden-Einheit" wird vorliegend in seinem für den Fachmann geläufigen Sinn, wie er beispielsweise in dem Buch vom Herausgeber Ledjeff: "Brennstoffzellen" vom Müller Verlag oder in einer der zitierten Patentbeschreibungen erklärt wird, verwendet.

Als "Kollektor- oder Kontaktplatte" wird hier jede Abschlußplatte einer Brennstoffzelleneinheit der Batterie bezeichnet. Dabei kann es sich sowohl um herkömmliche "Bipolarplatten" oder "bipolare Platten", bei denen zwei Kollektorplatten zu einer Bipolarplatte zusammengefaßt sind, als auch um einzelne Polplatten wie beispielsweise in der DE-PS 44 42 285 beschrieben, handeln. Herkömmliche Bipolarplatten sind u.a. in dem Buch des Herausgebers Ledjeff "Brennstoffzellen" beschrieben.

Als "Kühlkarte" wird jede Art einer verschweißten oder sonstwie gebildeten Platte verstanden, die einen Hohlraum für das Kühlmedium bildet. Beipielsweise handelt es sich um Doppelplatten, die aufeinanderliegen und entlang der Kanten miteinander abdichtend aneinandergefügt sind. Die Kühlkarten können Öffnungen zur Aufnahme und Abgabe von Kühlmedium enthalten, die mit Dichtelementen oder Dichtlippen so umgeben sind, daß durch einfache Stapelung der Kühlkarten Leitungen zwischen diesen entstehen, durch die das Kühlmedium fließen kann.

Die Hohlräume in den einzelnen Kühlkarten einer Brennstoffzellenbatterie oder mehrerer Batterien können untereinander über Leitungen verbunden sein. Diese Leitungen können an jede Art eines Kühlkreislaufsystems angeschlossen sein, wobei die Ausgestaltung des Kühlkreislaufssystems wiederum völlig beliebig, z.B. über Wärmekraftmaschinen bis zu einfachen Heizungen hin ausgestaltet sein kann. Das Material der Platten, die zusammen mit den Dichtelementen die Kühlkarte bilden, muß elektrisch und thermisch leitfähiges Material sein und sollte genügende Elastizität aufweisen, so daß es auch zur Übertragung des mechanischen Drucks in der Batterie praktisch brauchbar ist und Bauteiltoleranzen ausgeglichen werden. Beispielsweise sind Edelstahl oder Federbronze oder andere Kupfer- oder Aluminiumlegierungen sowie Kunststoffe, z.B. metallhaltige Polymere, geeignet. Zur Verringerung des Kontaktwiderstandes und zur besseren Wärmeabgabe an das Kühlmedium kann eine Oberflächenbehandlung der Platten (z.B. Vergoldung) erfolgen, die auch vor Korrosion schützen kann. Eine derartige Oberflächenbehandlung kann nicht nur für die Kühlkarten sinnvoll sein, sondern auch für andere Elemente einer erfindungsgemäßen Batterie.

Unter "Leitungen" werden im Sinne der vorliegenden Erfindung zunächst Leitungen verstanden, die sich durch die Montage der Einzelelemente einer PEM-Brennstoffzellenbatterie ohne zusätzliche Leitungsteile bilden. Genausogut können die erfindungsgemäßen Leitungen aber auch durch fertige Leitungsteile, wie Rohre oder Schläuche, die in die Batterie integriert werden, zusammengesetzt und konstruiert sein. Alle denkbaren Leitungen und Leitungsanordnungen für Kühlmedien werden von der vorliegenden Erfindung mitumfaßt.

Die Dicke der einzelnen Platten kann variieren. Bevorzugt beträgt sie zwischen 0,001mm und 1mm, besonders bevorzugt zwischen 0,01mm und 0,4mm und insbesondere zwischen 0,05mm und 0,2mm.

Die Herstellung der Kühlkarten sollte möglichst kostengünstig und einfach sein, beispielsweise durch abdichtendes Klammern und Zusammenstecken zweier vorgeprägter Platten unter Verwendung eines Dichtelements, das bevorzugt elastisch ist. Zur verbesserten thermischen und/oder elektrischen Leitfähigkeit der Kühlkarten mit den jeweils angrenzenden Kollektorblechen kann es sinnvoll sein, elektrische und/oder thermisch leitfähige Klebstoffe einzusetzen. Beispielsweise wird die gesamte aktive Fläche der Kühlkarte ebenso wie die Zellfläche des angrenzenden Kollektorblechs mit einem derartigen Klebstoff (entweder beid- oder einseitig) überzogen und dann aneinander gepreßt. Natürlich können auch nur einzelne Punkte oder Linien der Flächen über derartige Klebstoffschichten verbunden werden. Die Herstellung der Kühlkarten kann auch durch einfaches Zusammenschweißen oder -löten der Doppelplatten erfolgen. Jede praktikable Herstellung von Kühlkarten, sei sie aus einem Teil oder mehrstückig und sei sie durch Löten, Kleben, Schweißen oder sonst irgendwie zustande gekommen, wird von der Erfindung miterfaßt.

Unter "Kühlmedium" wird eine Flüssigkeit (Beispiel Wasser, Alkohol, Öl) oder ein Gas (beispielsweise eine endotherm reagierende Gasmischung, die sich die Wärme für einen kontinuierlich ablaufenden Prozeß aus der Abwärme der Brennstoffzelle holt) verstanden.

Die Kühlkarten können Zwischenelemente, wie sie beispielsweise in der deutschen Patentanmeldung mit dem Aktenzeichen 196 359 01.5 beschrieben sind, und die innerhalb der Batterie zur Übertragung des elektrischen Stromes, mechanischen Drucks und zur Wärmeübertragung oder Ableitung dienen, ersetzen. Andererseits kann das Zwischenelement aber auch in veränderter Form beibehalten werden, wobei die Kühlkarte entweder in das Zwischenelement integriert oder mit ihm durch einen elektrisch und thermisch leitenden Kleber oder sonstige Verbindungen, die elektrisch und thermisch leitend sind, verbunden werden. Beispielsweise ist eine Verbindung von Kühlkarte und/oder Zwischenelement mit dem Kollektorblech über Löten oder Schweißen denkbar, solange sichergestellt ist, daß der mechanische Druck, der Strom und die Abwärme über diese Verbindungsteile leitbar sind.

Im folgenden wird die Erfindung noch anhand dreier Figuren, von denen
Figur 1 eine Sprengansicht einer Ausführungsform einer erfindungsgemäßen Batterie zeigt, bei der jeweils zwei Brennstoffzelleneinheiten und zwei Kühlkarten schematisch erkennbar sind,
Figur 2 die zwei gebräuchlichsten Arten von Kühlkarten im Querschnitt zeigt, wobei Figur 2a eine durch Löten oder Schweißen verbundene Kühlkarte zeigt und Figur 2b eine durch abdichtendes Klammern verbundene Kühlkarte im Querschnitt,
Figur 3 schließlich eine erfindungsgemäße Batterie mit sechs Brennstoffzelleneinheiten, einer vorderen und hinteren Abdeckplatte sowie einer Verschraubung mit Zuganker zeigt.

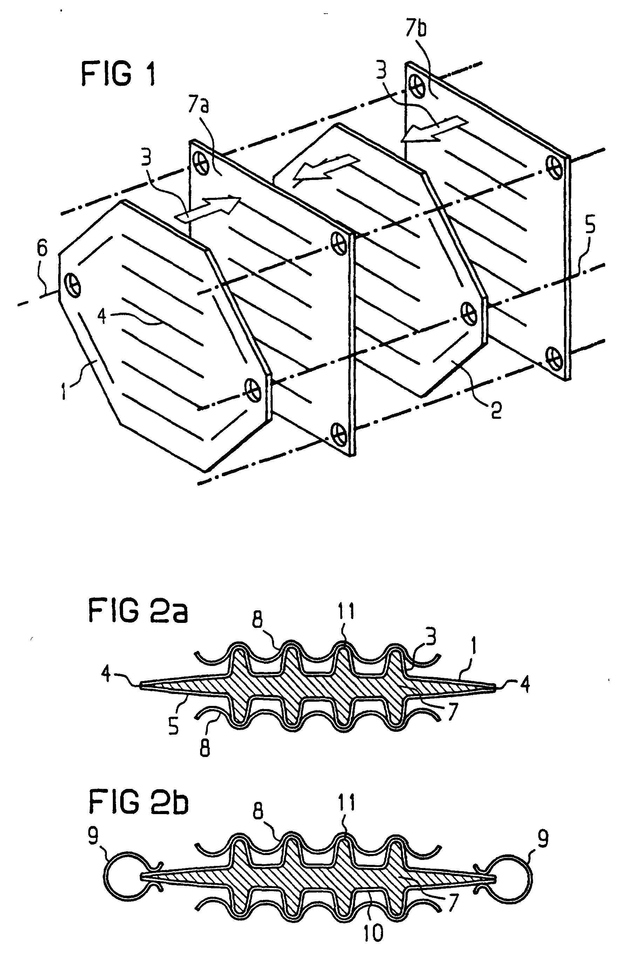

Figur 1 zeigt vier einzelne Teile, die für eine funktionsfähige Batterie entlang der Pfeile 3 zusammengebaut werden. Ganz vorne ist eine erste Kühlkarte 1 erkennbar, die zwei durchgehende Öffnungen, die mit den entsprechenden Öffnungen der zweiten Kühlkarte 2 über Leitungen 5 und 6 verbunden sind, aufweist. Die achteckige Form der Kühlkarte zeigt eine bevorzugte Ausführungsform, aber die Form und Eckenanzahl der Kühlkarten sollen den Umfang der Erfindung nicht beschränken. Vielmehr ist jede mögliche Form der Kühlkarten, also auch eine runde oder kurvige Gestaltung, erfindungsgemäß inbegriffen. Damit die Kühlkarte eine gleichmäßige Durchströmung mit Kühlmedium erfährt, weisen die hier beispielhaft gezeichneten Kühlkarten 1 und 2 Querkanale 4 auf, die durch die Längslinien 4 schematisch angedeutet sind. Die gestrichelte Linie 5 zeigt, wie die beiden Kühlkarten 1 und 2 durch Laitungen verbunden sind. Bevorzugt sind diese Leitungen Axialkanale, die wie die restlichen Kanäle der Brennstoffzellenbatterie, beispielsweise die Brennstoff- und Oxidanszu- und-ableitungskanäle, zusammengesetzt sind. In diesen Leitungen wird das Kühlmedium geführt. Beispielsweise wird in der rechten Leitung 5 das frische Kühlmedium zu den Kühlkarten hin- und - nach Verbrauch- durch die linke Leitung 6 wieder abtransportiert. Hinter der Kühlkarte 1 befindet sich die erste Brannstoffzelleneinheit 7a, bei der wiederum schematisch die vier axialen versorgungs- und Entsorgungskanäle und die Verteilungskanäle entlang der Zellfläche erkennbar sind.

Beim Zusammenbau der Batterie entlang der Pfeile 3 müssen neben den Leitungen, die einerseits die Brennstoffzelleneinheiten untereinander und andererseits die Kühlkarten untereinander verbinden, auch noch Dichtelemente an den jeweiligen Leitungen an ihrer Schnittstelle zu den Kühlkarten oder Brennstoffzellen eingefügt werden. Diese Dichtelemente können auch bereits in den Brennstoffzelleneinheiten oder den Kühlkarten integriert sein, wie dies beispielsweise für die Brennstoffzelleneinheiten schon vorgeschlagen wurde (DE-PS 44 42 285), so daß weitere Bauteile nicht notwendig sind. Beim Zusammenbau ist aber darauf zu achten, daß die KühlkarKühikarten keinen elektrischen Kontakt zueinander haben, da sonst die dazwischenliegenden Brennstoffzellen kurzgeschlossen wären. Bei den Dichtungen handelt es sich im allgemeinen um elastisches Dichtungsmaterial, wie es herkömmmlicher Weise bei Brennstoffzellenbatterien benutzt wird. Die hier gezeigte Anzahl von Leitungen und Axialkanälen, die die einzelnen Systeme untereinander verbinden, sind natürlich nur beispielhaft und es ist durchaus denkbar, daß beispielsweise die Kühlkarten untereinander mit mehr als zwei Leitungen verbunden sind.

Die Figur 2 ist in zwei Unterabschnitte, nämlich Figur 2a und Figur 2b unterteilt. Figur 2a zeigt in der Mitte eine erfindungsgemäße Kühlkarte 1, die an ihren Ecken 4 jeweils verschweißt ist. Deutlich erkennbar ist das obere Teilstück 3 der Doppelplatte, die im vorliegenden Ausführungsbeispiel der Erfindung die Kühlkarte 1 bildet, und das untere Teilstück 5. Die beiden Einzelplatten 3 und 5 sind, wie gesagt, zur einfacheren Herstellung z. B. vorgeprägte Platten, die.beispielsweise durch Löten, Verschweißen oder Kleben an den Kanten 4 abdichtend zusammengehalten werden. Nicht zu erkennen sind die Öffnungen, mit denen die Kühlkarten untereinander verbunden sind, weil der hier gezeigte Querschnitt parallel zu diesen Öffnungen verläuft. Durch die Schraffur erkennbar ist das Kühlmedium 7, das innerhalb der Kühlkarte durch die Gestaltung der Kühlkarte, die dem Medium eine bestimmte Strömung aufzwingt, eine gleichmäßige Verteilung erfährt.

Im Anschluß an die Kühlkarte befindet sich jeweils oben und unten eine Kollektorplatte 8, die zur Stromübertragung sowie, als Gehäuse der Brennstoffzelle, zur Medienführung und zur Abstützung der Elektrolyten dient. Die Kollektorplatten 8 sind ebenso wie die Kühlkarten untereinander verbunden und müssen ebenso elektrisch leitfähig sein. Die elektrische Leitung oder Serienschaltung der Kollektorplatten darf auch durch die Kühlkarten nicht unterbrochen werden. Falls die Kühlkarten elektrischen Kontakt zu den benachbarten Brennstoffzellen haben, ist es einsichtig, daß beispielsweise bei der Ausführungsform der Kühlkarte nach 2b, wo die Kühlkarte durch abdichtende Verklammerung zweier Elemente gebildet wird, eine elektrisch leitfähige Verbindung von einer Kollektorplatte zur nächsten Kollektorplatte über die Kühlkarte entweder durch Kontakt innerhalb der Karte 10 oder über die abdichtende Klammerung 9 gewährleistet sein muß. Zwischen den beiden Kollektor- oder Kontaktplatten 8 der Figur 2a und 2b befindet sich in einer erfindungsgemäßen Batterie eine Brennstoffzelleneinheit (Membran-Elektroden-Einheit), auf deren Darstellung hier verzichtet wurde. Der zumindest thermische und ggf auch elektrische und/oder mechanische Kontakt der Kühlkarte mit dem angrenzenden Kollektorblech oder der Kollektorplatte der benachbarten Brennstoffzelle besteht entlang der Flächen 11, an denen die Kollektorplatten mit den Kühlkarten zusammenstoßen. Diese Flächen werden entweder dadurch gebildet, daß die beiden Teile, also Kollektorplatte einerseits und Kühlkarte andererseits, mechanisch aufeinander gedrückt werden (wobei z.B. die Zuganker an den Endplatten der fertigen Batterie einen ausreichenden mechanischen Druck erzeugen), oder sie werden durch einen Kleber erzeugt, der zwischen diese Teile angebracht wird und diese Teile zumindest thermisch und ggf auch elektrisch leitend verbindet. Besonders günstig ist die Ausführungsform, bei der der Kontakt zunächst über den mechanischen Druck erzeugt und dann mit dem thermisch und u.U. auch elektrisch leitenden Kleber verstärkt wird. Durch die Verwendung eines Klebers kann auch eine Verbesserung der thermischen und elektrischen Leitfähigkeit dieser Kontaktflächen erzielt werden. Ebenso kann beispielsweise auch die Herstellung, d.h. der Zusammenbau einer Brennstoffzellenbatterie durch Klebeverbindungen stark vereinfacht werden. Bei einer besonders bevorzugten Ausführungsform kann die Herstellung der Kühlkarten über abdichtendes Klammern, wie in 2b gezeigt, über dasselbe Klammerungssystem erfolgen, wie beispielsweise in der DE-PS 44 42 285 offenbart ist. Dabei müßte die Verwendung der gleichen Klammerung die Herstellungskosten einer fertigen Brennstoffzellenbatterie weiter absenken können. Denkbar ist auch ein Falzverfahren, wie es bei der Herstellung von Konserven und Getränkedosen angewendet wird.

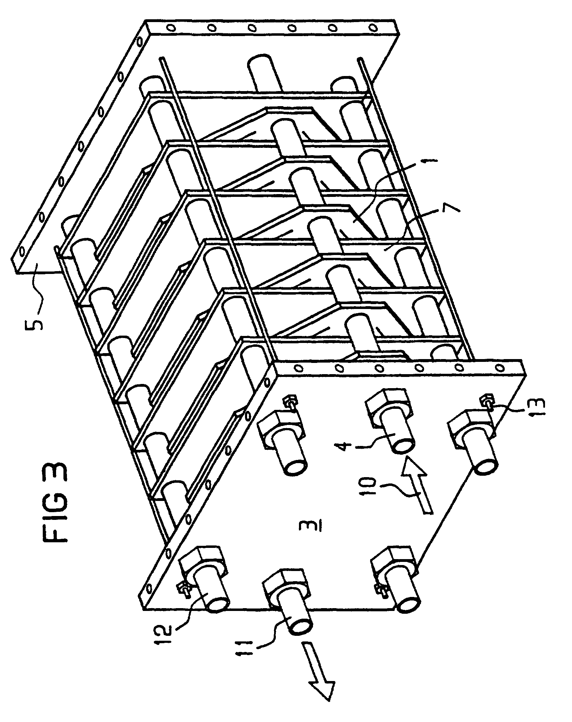

Figur 3 zeigt einen Zellstapel einer erfindungsgemäßen Batterie mit Enaplatten und Zugankern. Wie bei der luftgekühlten Variante (siehe DE-PS 44 42 285) sind dabei die einzelnen Zellen funktionsfähig und eine Leckstelle läßt Reaktionsgas nur in den Außenraum und an die Umgebungsluft austreten. Defekte Zellen können so einzeln detektiert und ausgetauscht werden. Jeweils zwischen zwei Zellen oder Brennstoffzelleneinheiten steckt eine Kühlkarte 1 und die einzelnen Kühlkarten untereinander sind über Leitungen 5 miteinander verbunden. Die Leitung 5 entsteht nach der bevorzugten Ausführungsform dadurch, daß das eine Dichtelement oder die eine Dichtlippe, die die Öffnung der ersten Kühlkarte umgibt durch die Stapelung auf die andere Dichtlippe oder das andere Dichtlelement der folgenden zweiten Kühlkarte mittels Zuganker so drückt, daß die Leitung 5 entsteht. Die Versorgung der einzelnen Brennstoffzelleneinheiten 7 sowie der einzelnen Kühlkarten untereinander erfolgt über Leitungen, die jeweils mit einem Einlaß und einem Auslaß an den Endplatten der Batterie verbunden sind. Auf der Endplatte 3 sieht man die Einlaßöffnung 4, durch die das Kühlmedium 10 in die Leitung 5 gelangt, die die einzelnen Kühlkarten wie oben beschrieben, verbindet. Auf derselben Höhe nur als Auslaßöffnung ist die Öffnung 11 gezeigt, durch die das verbrauchte Kühlmedium, das in der Leitung 6 (Figur 1) transportiert wird, den Brennstoffzellenstapel oder die Batterie wieder verläßt und beispielsweise einer Regenerierung in einem Wärmetauscher oder einem sonstigen Regenerationssystem zugeführt wird. Die einzelnen Zellen 7 werden über vier Kanäle mit Reaktionsgasen ver- und entsorgt, wobei die Ein- und Auslaßöffnungen beispielsweise als Öffnung 12 auf der Endplatte 3 zu erkennen sind. Ebenfalls auf der Endplatte 3 erkennbar sind die Zuganker 13, mit denen die gesamte Satterie zusammengehalten wird.

Die beispielhaft genannten geometrischen Formen und schematischen dargestellten Zeichnungen stellen zwar bevorzugte Ausführungsformen der Erfindung dar, sollen jedoch den Umfang der Erfindung keineswegs beschränken. Das Einsatzgebiet derartiger Brennstoffzellenbatterien ist vielfältig und reicht von der Elektrotraktion bis zur stationären Anwendung im höheren Kilowattbereich.

## Patentansprüche

1. Batterie aus zumindest zwei Brennstoffzelleneinheiten (7), von denen jede eine Membran-Elektroden-Einheit und zwei Kollektorplatten umfaßt und sich zwischen den Brennstoffzellen zumindest eine Kühlkarte (1,2) befindet, die thermischen Kontakt zu zumindest einer der benachbarten Brennstoffzellen (7) hat, wobei die Leitungen (5,6) des Kühlkreislaufs allein durch die Stapelung der Kühlkarten mit den Einzelelementen der Brennstoffzellenbatterie bei der Montage des Brennstoffzellenstapels gebildet werden(Figur 1).

2. Batterie nach Anspruch 1, bei der elektrischer Kontakt zwischen der Kühlkarte (1) und den benachbarten Brennstoffzellen (7) besteht (Figur 1).

3. Batterie nach einem der vorstehenden Ansprüche, bei der die Leitungen mit einem externen Wärmetauscher verbunden sind.

4. Batterie nach einem der vorstehenden Anspruche, bei der die Kühlkarten Doppelplatten umfassen, die durch abdichtendes Klammern und Zusammenstecken zweier geprägter Platten verbunden sind.

5. Batterie nach einem der vorstehenden Ansprüche, bei der die Kühlkarten mit den Kollektorplatten und/oder Zwischenelementen und/oder Bipolarplatten der Batterie durch einen Klebstoff, der thermisch leitend ist, verbunden sind.

6. Batterie nach einem der vorstehenden Ansprüche, bei der die Kühlkarten mit den Kollektorplatten und/oder Zwischenelementen und/oder Bipolarplatten durch einen Klebstoff, der thermisch und elektrisch leitend ist, verbunden sind.

7. Batterie nach einem der vorstehenden Ansprüche, bei der die Kühlkarten Teil eines Zwischenelements, das sich zwischen den Kollektorplatten der einzelnen Brennstoffzellen befindet, sind.

8. Batterie nach einem der vorstehenden Ansprüche , bei der die Kühlkarten in den Bipolarplatten montiert sind und/oder in die Bipolarplatten eingeschoben werden können.

9. Verfahren zur Herstellung einer Brennstoffzelienbatterie nach einem der vorstehenden Ansprüche, bei dem thermisch oder thermisch und elektrisch leitende Klebstoffe zur leitenden Verbindung der Einzelteile, aus denen die Batterie zusammengesetzt ist, verwendet werden.

## Claims

1. Battery of at least two fuel cell units (7), each of which comprises a membrane-electrode unit and two collector plates, and at least one cooling card (1, 2) is located between the fuel cells and is in thermal contact with at least one of the neighbouring fuel cells (7), the lines (5, 6) of the cooling circuit being formed merely by the stacking of the cooling cards with the individual elements of the fuel cell battery during the assembly of the fuel cell stack (Figure 1).

2. Battery according to Claim 1, in which electrical contact exists between the cooling card (1) and the neighbouring fuel cells (7) (Figure 1).

3. Battery according to one of the preceding claims, in which the lines are connected to an external heat exchanger.

4. Battery according to one of the preceding claims, in which the cooling cards comprise double plates which are connected by sealingly clamping and putting together two embossed plates.

5. Battery according to one of the preceding claims, in which the cooling cards are connected to the collector plates and/or intermediate elements and/or bipolar plates of the battery by an adhesive which is thermally conductive.

6. Battery according to one of the preceding claims, in which the cooling cards are connected to the collector plates and/or intermediate elements and/or bipolar plates by an adhesive which is thermally and electrically conductive.

7. Battery according to one of the preceding claims, in which the cooling cards are part of an intermediate element located between the collector plates of the individual fuel cells.

8. Battery according to one of the preceding claims, in which the cooling cards are mounted in the bipolar plates and/or can be inserted into the bipolar plates.

9. Method of producing a fuel cell battery according to one of the preceding claims, in which thermally or thermally and electrically conductive adhesives are used for the conductive connection of the individual parts of which the battery is composed.

## Revendications

1. Batterie constituée d'au moins deux unités (7) de piles à combustible, dont chacune comprend une unité membrane-électrode et deux plaque de collecteur et il se trouve, entre les piles à combustible, au moins une carte (1, 2) de refroidissement qui a un contact thermique avec au moins l'une des piles (7) à combustible voisines, les conduits (5, 6) du circuit de refroidissement étant formés seulement par l'empilement des cartes de refroidissement avec les éléments individuels de la batterie de piles à combustible lors du montage de l'empilement de piles à combustible (figure 1).

2. Batterie suivant la revendication 1, dans laquelle il y a contact électrique entre la carte (1) de refroidissement et les piles (7) à combustible voisines (figure 1).

3. Batterie suivant l'une des revendications précédentes, dans laquelle les conduits communiquent avec un échangeur de chaleur extérieur.

4. Batterie suivant l'une des revendications précédentes, dans laquelle les cartes de refroidissement comprennent des plaques doubles qui sont reliées par des agrafes étanches et par le coenfilage de deux plaques estampées.

5. Batterie suivant l'une des revendications précédentes, dans laquelle les cartes de refroidissement sont reliées aux plaques de collecteur et/ou à des éléments intermédiaires et/ou à des plaques bipolaires de la batterie par de la colle qui est thermiquement conductrice.

6. Batterie suivant l'une des revendications précédentes, dans laquelle les cartes de refroidissement sont reliées aux plaques de collecteur et/ou à des éléments intermédiaires et/ou à des plaques bipolaires de la batterie par de la colle qui est thermiquement conductrice.

7. Batterie suivant l'une des revendications précédentes, dans laquelle les cartes de refroidissement font partie d'un élément intermédiaire qui se trouve entre les plaques de collecteur des piles à combustible individuelles.

8. Batterie suivant l'une des revendications précédentes, dans laquelle les cartes de refroidissement sont montées dans les plaque bipolaires et/ou peuvent être glissées dans les plaques bipolaires.

9. Procédé de fabrication d'une batterie de piles à combustible suivant l'une des revendications précédentes, qui consiste à utiliser de la colle thermiquement conductrice ou électriquement conductrice pour la liaison conductrice des parties individuelles dont est composée la batterie.
